# EUROPÄISCHE PATENTSCHRIFT

(11) **EP 1 139 538 B1**
(45) Veröffentlichungstag und Bekanntmachung des Hinweises auf die Patenterteilung: **22.10.2003**
(21) Anmeldenummer: 01107576.9
(22) Anmeldetag: 27.03.2001
(51) Int. Cl.: H02G 3/22, H02G 5/06

(54) **Stromschienenkanal und Trennwanddurchführung mit Stromschienenkanal**
Bus-bars duct and partition feed-through with bus-bars duct
Barres conductrices et traversée de cloison avec barres conductrices

(30) Priorität: 31.03.2000 DE 10015983
(43) Veröffentlichungstag der Anmeldung: 04.10.2001
(73) Patentinhaber: STN ATLAS Marine Electronics GmbH, 22763 Hamburg (DE)
(72) Erfinder: Seebode, Heinrich, 22607 Hamburg (DE)
(74) Vertreter: Rohnke, Christian, Dr.

(56) Entgegenhaltungen:
- EP-A- 0 731 542
- EP-A- 0 859 429
- DE-A- 2 403 135
- US-A- 3 636 237
- US-A- 5 194 192
- PAEG H: "CAST-RESIN-INSULATED BUSBARS CARRY HIGH CURRENTS" 1986 , SIEMENS POWER ENGINEERING & AUTOMATION,DE,SIEMENS AG. BERLIN, VOL. 6, NR. 3, PAGE(S) 9-11 XP002071422 * das ganze Dokument *

## Beschreibung

Die Erfindung betrifft einen Stromschienenkanal gemäß dem Oberbegriff des Anspruches 1, sowie eine Trennwanddurchführung mit einem solchen Stromschienenkanal.

Trennwanddurchführungen mit stromführenden Bauteilen werden vornehmlich in Schiffen des On- und Offshorebereichs in Decks oder Schotts eingesetzt und dienen zur Prävention von Feuer-, Wasser und Gasschäden. Sie finden zum gleichen Zweck auch Anwendung in Hoch- und Industriebauten, wo sie in Etagendecken oder Feüerschutzwänden zwischen Raumsektoren eingesetzt werden.

Trennwanddurchführungen mit stromführenden Kabeln sind bekannt. Z.B. werden bei dem bekannten GEAQUELLO®- System der Firma STN ATLAS Elektronik GmbH, Bremen, die Kabel durch einen in der Trennwandöffnung eingeschweißten Stahlstutzen hindurchgeführt. An den Stirnenden des Stahlstutzens werden Quellmodule zwischen den Kabeln einerseits und den Kabeln und dem Stahlstutzen andererseits zellenförmig grob eingepaßt, wodurch ein Mindestabstand zwischen den einzelnen Kabeln und dem Stutzen gewährleistet ist. Die enorm saugfähigen Quellmodule, die in unterschiedlichen Längen mit der Typenbezeichnung R312 und R380 angeboten werden, werden mit einer Imprägnierflüssigkeit, die unter der Typenbezeichnung E824 angeboten wird, bespritzt und quellen dadurch auf. Durch eine in dem Stahlstutzen vorhandene Öffnung wird eine Vergußmasse aus anorganischem Material, die unter der Typenbezeichnung E795 oder E950 angeboten wird, eingebracht, die nach ca. 3 - 4 Std. abbindet und anschließend chemisch aushärtet. Eine zweite Öffnung in dem Stahlstutzen dient zur Entlüftung beim Einbringen der Vergußmasse. Eine solche Trennwanddurchführung genügt den Sicherheitsforderungen der SOLAS-Vorschriften für Trennflächen vom Typ A60.

In jüngster Zeit setzen sich für die Stromversorgung innerhalb von Schiffen und Industrie- und Hochbauten immer stärker Stromschienenkanäle durch, bei denen eine Mehrzahl von parallel verlaufenden Stromschienen im Kanalinnern geführt sind, der in der Regel einen rechtförmigen Querschnitt aufweist.

Aus der DE-OS 24 03 135 ist eine Trennwanddurchführung mit stromführenden Stromschienen bekannt, bei dem im Bereich der Trennwand zwischen den Stromschienen untereinander und zwischen den Stromschienen und den benachbarten Wandungen eine Vielzahl von beweglich angeordneten Füllstücken angeordnet, sind die aus einem durch Wärme auffschäumbaren, nicht brennbaren Werkstoff gebildet sind. Zum Einen ist es sehr mühsam, die jeweiligen Füllstücke an der betreffenden Stelle der Trennwanddurchführung zunächst einmal auf Maß zu schneiden und anschließend in der richtigen Position zu plazieren und zum Anderen wird hierdurch zwar ein Feuerschutz gewährleistet, nicht aber eine Abdichtung gegen Rauch, Wasser und Gas.

Aus der EP 0 859 429 A 2 ist eine Verbindungsvorrichtung zum feuchtigkeitsgeschützen, elektrischen Verbinden zweier mehradriger Leitungsenden bekannt, bei der der Hohlraum nicht erst nach dem montierten Hülsenelement mit der Dichtmasse zu füllen ist, sondern dieses vielmehr vorher aufzubringen, geeignet etwa durch Schalen, Körper oder Pulver, die vor einer Montage der Hülse in den Verbindungsbereich gebacht werden, besonders geeignet etwa durch Umspritzen des Verbindungsbereiches.

Aus der US 5,194,192 ist eine Trennwanddurchführung bekannt, die ab Werk auf die gewünschte Länge vorgefertigt wird und bei der die jeweiligen, in der Trennwanddurchführung anzuordnenden Endbereiche mit einem aufquellenden Material ausgegossen sind. Anschließend wird dieser Stromschienenkanal dann vor Ort gebracht und montiert. Dabei ist aber eine gewissenhafte Vorplanung notwendig, damit die jeweiligen Stromschienenkanäle auch an die wahren Gegebenheiten vor Ort passen.

Der Erfindung liegt die Aufgabe zugrunde, einen solchen Stromschienenkanal mit innen verlaufenden, voneinander beabstandeten Stromschienen so zu verbessern, daß er zur Verwendung in Trennwanddurchführungen ohne Gefährdung des Sicherheitsstandards geeignet ist.

Die Aufgabe ist erfindungsgemäß durch die Merkmale des Anspruchs 1 gelöst.

Der erfindungsgemäße Stromschienenkanal hat den Vorteil, daß er durch die eingebrachte Vergußmasse selbst absolut dicht ist und kein Feuer, Rauch, Wasser oder Gas durch das Innere des den Schienenkanals hindurchzutreten vermag. Bei seiner Verwendung in einer Trennwanddurchführung wird somit deren Schutzwirkung gegen eben diese auftretenden Elemente weder unterlaufen noch gemindert. Die Vergußmasse, die vorzugsweise aus einem organischen Material, z.B., Harz, besteht gewährleistet Duchschlagsicherheit gegen Hochspannung zwischen Schiene und Schiene sowie Schiene und Masse von mehr als 16 kV und ist resistent gegen Feuer und Wasser.

Ein weiterer Vorteil besteht darin, dass der in Einbaulage sich durch die Öffnung der Trennwand erstreckende Kanalabschnitt durch zwei im Längsabstand voneinander in den Kanal eingepaßte Querwände begrenzt ist, die von den Stromschienen durchstoßen werden. Hierdurch kann die Vergußmasse den zwischen den Querwänden eingeschlossenen Raum vollständig ausfüllen.

Zweckmäßige Ausführungsformen des erfindungsgemäßen Stromschienenkanals mit vorteilhaften Weiterbildungen und Ausgestaltungen der Erfindung ergeben sich aus den weiteren Ansprüchen 2 - 4.

Zum Aufbau der Querwände im Kanalinnern und zum Einbringen der Vergußmasse ist gemäß einer vorteilhaften Ausführungsform der Erfindung in der Kanalwand mindestens ein sich über den Kanalabschnitt erstreckendes Fenster eingeschnitten.

Eine Trennwanddurchführung mit der erfindungsgemäßen Stromschiene ist im Anspruch 5 angegeben.

Zweckmäßige Ausführungsformen der Trennwanddurchführung mit vorteilhaften Weiterbildungen und Ausgestaltungen der Erfindung ergeben sich aus den Ansprüchen 6 - 9.

Die Erfindung ist anhand von in der Zeichnung dargestellten Ausführungsbeispielen im folgenden näher beschrieben. Es zeigen teilweise in etwas schematisierter Darstellung:
- Fig. 1: einen Längsschnitt einer Trennwanddurchführung mit einem Stromschienenkanal,
- Fig. 2: einen Schnitt längs der Linie II - II in Fig. 1
- Fig. 3: einen Schnitt längs der Linie III - III in Fig. 1,
- Fig. 4: eine perspektivische Darstellung des Stromschienenkanals der Trennwanddurchführung in Fig. 1 - 3,
- Fig. 5: eine Trennwanddurchführung mit einem Stromschienenkanal gemäß einem weiterem Ausführungsbeispiel.

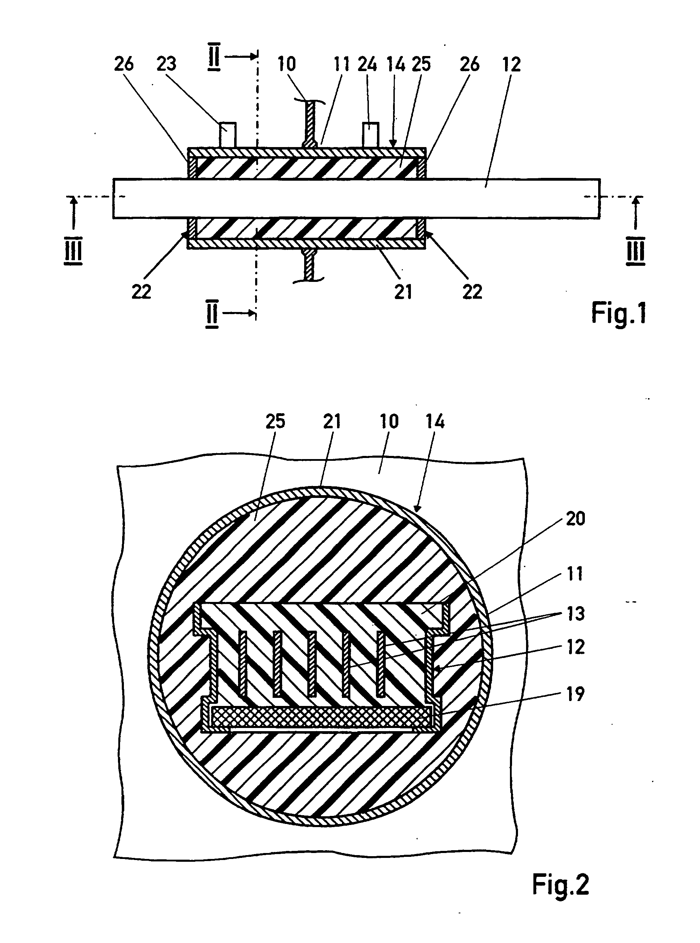

Die in Fig. 1 -3 in verschiedenen Schnitten dargestellte Trennwanddurchführung ist für vertikale Trennwände 10 konzipiert, z.B. für Schotts in Schiffen. Die Trennwanddurchführung weist als stromführendes Bauteil einen durch eine Wandöffnung 11 in der Trennwand 10 hindurch sich erstreckenden Stromschienenkanal 12 auf, in dem eine Mehrzahl von parallelen Stromschienen 13 voneinander beabstandet angeordnet sind. Zur Trennwanddurchführung gehört eine Dichtungsmanschette 14, die zwischen dem Stromschienenkanal 12 und dem Öffnungsrand der Wandöffnung 11 einliegt und ein Durchschlagen von Feuer, Rauch, Wasser oder Gas durch die Wandöffnung 11 hindurch verhindert.

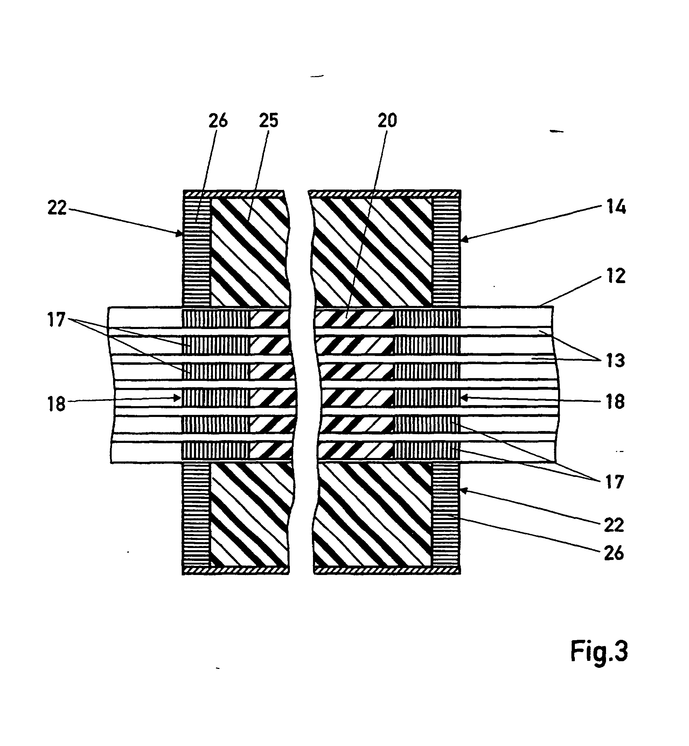

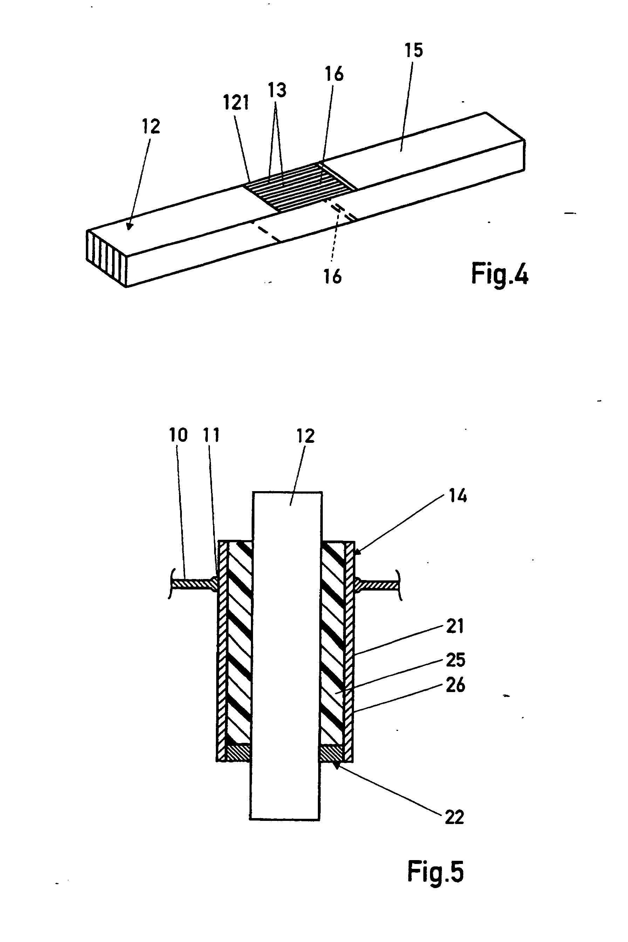

Der Stromschienenkanal 12 mit einliegenden Stromschienen 13 ist in Fig. 4 in perspektivischer Ansicht und in Fig. 2 und 3 vergrößert in Schnittdarstellung zu sehen. Wie Fig. 4 zeigt, sind in einem Kanalabschnitt 121 des Stromschienenkanals 12, der in Einbaulage sich durch die Wandöffnung 11 der Trennwand 10 hindurch erstreckt, in die Kanalwand 15 zwei einander kongruent gegenüberliegende Fenster 16 eingeschnitten, durch die hindurch das Innere des Stromschienenkanals 12 zugänglich ist. Durch diese Fenster 16 werden Rockwoolplatten 17 zwischen die Stromschienen 13 so eingesetzt, daß an den beiden Enden des Kanalabschnitts 121 jeweils eine geschlossene Querwand 18 aufgebaut ist, die nur von den Stromschienen 13 durchstoßen wird (Fig. 3). Die Rockwoolplatten 17 sind Platten aus Rockwoolfaser, die z.B. unter der Handelsbezeichnung CONLIT erhältlich sind. Wie aus Fig. 2 zu sehen ist, wird nach Aufbau der beiden Querwände 18 in das in Fig. 4 untere Fenster 16 eine getränkte Steinwollmatte 19 eingelegt, die den Fensterrand hintergreift und das Fenster 16 vollständig abdeckt. Durch das obere Fenster 16 wird nunmehr eine hochisolierende Vergußmasse 20 in den von den beiden Querwänden 18 begrenzten Kanalabschnitt 121 eingegossen, die alle Hohlräume zwischen den Stromschienen 13 und den Stromschienen 13 und der Kanalwand 15 ausfüllt. Die Vergußmasse 20 besteht aus einem organischen Stoff, vorzugsweise einem Harz, und wird unter der Handelsbezeichnung E292 von der Firma STN ATLAS Elektronik GmbH angeboten. Nach Aushärten der Vergußmasse 10 besitzt die nunmehr für den Einbau in die Trennwanddurchführung vorbereitete Stromschiene 13 einen definierten Kanalabschnitt 121, in dem alle Hohlräume zwischen den Stromschienen 13 einerseits und den Stromschienen 13 und der Kanalwand 15 andererseits mit einer elektrisch hochisolierenden Vergußmasse 20 ausgefüllt sind, die einer Hochspannungsprüfung von 16 - 20 kV standhält. Die Vergußmasse 20 ist feuerresistent und wasserdicht.

Die Dichtungsmanschette 14 der Trennwanddurchführung weist einen hohlzylindischen Stutzen 21, vorzugsweise aus Stahl, auf, dessen Stutzenlänge in etwa der Länge des mit der Vergußmasse 20 ausgefüllten Kanalabschnitts 121 des Stromschienenkanals 12 entspricht. Der Stutzen 21 wird in die Wandöffnung 11 eingesetzt und um den Öffnungsrand der Wandöffnung 11 herum mit der Trennwand 10 verschweißt. Wie Fig. 2 zeigt, wird der Stutzen 21 bei vertikaler Trennwand 10 soweit durch die Wandöffnung 11 hindurchgeschoben, daß die links und rechts der Trennwand 10 liegenden Stutzenabschnitte etwa gleich lang sind. Nunmehr wird der Stromschienenkanal 12 durch den Stutzen 21 hindurchgeführt und so plaziert, daß der Kanalabschnitt 121 im Stutzen 21 liegt und von diesem etwa gleichförmig umschlossen wird. In den beiden Stutzenenden wird jeweils eine Stirnwand 22 aus aufquellbaren Quellmodulen 26 aufgebaut, die am Stutzenende den Ringraum zwischen Stromschienenkanal 12 und Stutzen 21 verschließen und gleichzeitig den Stromschienenkanal 12 im Stutzen 21 abstützen. Die Quellmodule 26 werden von der Firma STN ATLAS Elektronik GmbH unter der Bezeichnung R312 und R380 angeboten. Die Quellmodule 26 werden mit einer Imprägnierflüssigkeit E824 bespritzt und quellen dadurch auf. Dadurch bildet sich jeweils eine stabile, vergußdichte Stirnwand 22, die schwer entflammbar, feuerhemmend, selbstverlöschend und hallogenfrei ist. Die poröse Struktur der Quellmodule 26 fördert dabei die Trocknung.

Der zwischen den beiden Stirnwänden 22 eingeschlossene hohlzylindische Raum wird nunmehr mit einer Vergußmasse 25 aus einem anorganischen Material vollständig aufgefüllt. Als vergußmasse 25 wird die von der Firma STN ATLAS Elektronik GmbH angebotene Vergußmasse E950 verwendet. Für die Durchführung des Gießvorgangs ist - wie Fig. 1 zeigt - eine Einfüllöffnung 23 und eine Entlüftungsöffnung 24 im Stutzenmantel angeordnet. Nach Aushärten der Vergußmasse 25 ist die Trennwanddurchführung fertig montiert.

In Fig. 5 ist die Trennwanddurchführung 25 in einer horizontal verlaufenden Trennwand 10 realisiert. Solche Trennwände werden von Decks in Schiffen oder von Raumdecken zwischen den Etagen von Industrie- oder Hochbauten gebildet. Die Trennwanddurchführung ist in gleicher Weise aufgebaut wie vorstehend beschrieben, jedoch mit einer Modifikation der Dichtungsmanschette 14. Der vertikal ausgerichtete Stutzen 21 ist wiederum durch die Wandöffnung 11 in der Trennwand 10 hindurchgesteckt, aber so, daß die Länge des unterhalb der Trennwand 10 liegende Stutzenabschnitts sehr viel größer ist als die Länge des über die Trennwand 10 nach oben vorstehenden Stutzenabschnitts. Der Stutzen 21 ist in gleicher Weise um den Öffnungsrand der Wandöffnung 11 herum mit der Trennwand 10 verschweißt. Des weiteren ist nur das untere Ende des Stutzens 21 mit einer Stirnwand 22 aus Quellmodulen 26 verschlossen. Das obere Stutzenende ist offen und dient zum Einfüllen der Vergußmasse 25, so daß auch Einfüll- und Entlüftungsöffnung 23, 24 am Stutzen 21 entfallen sind.

## Patentansprüche

1. Stromschienenkanal zum Durchführen durch in Trennwänden (10) vorgehaltenen Öffnungen (11), in dem voneinander beabstandete Stromschienen (13) verlaufen, wobei in einem in Einbaulage sich durch die Öffnung (11) erstreckenden Kanalabschnitt (121) die zwischen den Schienen (13) einerseits und den Schienen (13) und der Kanalwand (15) andererseits vorhandenen Hohlräume mit einem elektrisch hochisolierenden Material ausgefüllt sind,
**dadurch gekennzeichnet,**
**dass** der Kanalabschnitt (121) durch zwei im Längsabstand voneinander im Kanalinnern eingepasste Querwände (18) beispielsweise aus Rockwoolplatten (17) begrenzt ist, die von den Stromschienen (13) durchstoßen werden, und dass im Kanalabschnitt (121) die zwischen den Querwänden (18) eingeschlossenen Hohlräume vollständig mit einer elektrisch hochisolierenden Vergussmasse ausgefüllt sind.

2. Stromschienenkanal nach Anspruch 1,
**dadurch gekennzeichnet,**
**dass** die Vergussmasse (20) aus einem organischen Stoff, vorzugsweise Harz, besteht.

3. Stromschienenkanal nach einem der Ansprüche 1 oder 2,
**dadurch gekennzeichnet,**
**dass** in der Kanalwand (15) mindestens ein über den Kanalabschnitt (121) sich erstreckendes Fenster (16) eingeschnitten ist, durch das hindurch die Querwände (18) zwischen die Schienen (13) eingepasst werden und die Vergussmasse (20) eingefüllt wird.

4. Stromschienenkanal nach Anspruch 3,
**dadurch gekennzeichnet,**
**dass** in die Kanalwand (15) zwei kongruent gegenüberliegende Fenster (16) eingeschnitten sind und dass nach dem Einpassen der Stirnwände (22) ein Fenster (16) mit einer Steinwollmatte (19) abgedeckt und der Kanalabschnitt (121) über das andere Fenster (16) vergossen wird.

5. Trennwanddurchführung, insbesondere in Schiffen oder in Industrieoder Hochbauten, mit einem sich durch eine Trennwandöffnung (11) hindurch erstreckenden Stromschienenkanal (12) nach einem der Ansprüche 1 - 4 und mit einer zwischen dem Stromschienenkanal (12) und dem Öffnungsrand der Trennwandöffnung (11) einliegenden Dichtungsmanschette (14), die einen über den mit Vergussmasse (20) ausgefüllten Kanalabschnitt (121) des Stromschienenkanals (12) sich erstreckenden, diesen mit Abstand umschießenden, an der Trennwand (10) befestigten, vorzugsweise hohlzylindrischen Stutzen (21), mindestens eine ein Stutzenende verschließende Stirnwand (22) aus aufgequellten Quellmodulen (26), die von dem Stromschienenkanal (12) durchstoßen ist, und eine den Zwischenraum zwischen Stutzen (21) und Stromschienenkanal (12) ausfüllende, anorganische Vergussmasse (25) aufweist.

6. Trennwanddurchführung nach Anspruch 5,
**dadurch gekennzeichnet,**
**dass** der Stutzen (21) um den Öffnungsrand der Trennwandöffnung (11) herum mit der Trennwand (10) verschweißt ist.

7. Trennwanddurchführung nach Anspruch 5 oder 6,
**dadurch gekennzeichnet,**
**dass** bei horizontaler Einbaulage des Stutzens (21) das andere Stutzenende mit einer gleichen Stirnwand (22) verschlossen ist und dass zum Einbringen der Vergussmasse (25) in den von den Stirnwänden (22), dem Stutzen (21) und dem Stromschienenkanal (12) begrenzten Zwischenraum in der Stutzenwand eine Einfüllöffnung (23) und eine Entlüftungsöffnung (24) angeordnet sind.

8. Trennwanddurchführung nach Anspruch 7,
**dadurch gekennzeichnet,**
**dass** bei durch eine vertikale Trennwand (10) hindurchgeführtem Stromschienenkanal (12) der Stutzen (21) etwa mittig an der Trennwand (10) befestigt ist.

9. Trennwanddurchführung nach Anspruch 6,
**dadurch gekennzeichnet,**
**dass** bei durch eine horizontale Trennwand (10) hindurchgeführtem Stromschienenkanal (12) der Stutzen (21) außermittig in seinem oberen Bereich an der Trennwand (10) befestigt ist.

## Claims

1. Busbar channel for passing through openings (11) in partition walls (10), in which busbar channel busbars (13) which are spaced apart from one another run, with the cavities between the busbars (13) on the one hand and the busbars (13) and the channel wall (15) on the other hand being filled with an electrically highly insulating material in a channel section (121) which extends through the opening (11) in the installed position,
**characterized**
**in that** the channel section (121) is bounded by two transverse walls (18) which are fitted into the channel interior spaced apart from one another longitudinally and are composed, for example, of rockwool panels (17) through which the busbars (13) pass, and in that the cavities which are enclosed between the transverse walls (18) are filled with an electrically highly insulating encapsulation compound in the channel section (121).

2. Busbar channel according to Claim 1,
**characterized**
**in that** the encapsulation compound (20) is composed of an organic substance, preferably resin.

3. Busbar channel according to one of Claims 1 or 2,
**characterized**
**in that** at least one window (16), which extends over the channel section (121), is cut into the channel wall (15), through which the transverse walls (18) are fitted between the busbars (13), and the encapsulation compound (20) is inserted.

4. Busbar channel according to Claim 3,
**characterized**
**in that** two windows (16) which are opposite one another such that they are congruent are cut into the channel wall (15), and in that, after the end walls (22) have been fitted, a window (16) is covered with a rockwool mat (19) and the channel section (121) via the other window (16) is encapsulated.

5. Partition wall bushing, in particular in ships or in industrial or high-rise buildings, having a busbar channel (12) which extends through a partition wall opening (11) according to one of Claims 1-4, and having a sealing collar (14), which is inserted between the busbar channel (12) and the opening edge of the partition wall opening (11), has a preferably hollow-cylindrical connecting stub (21) which extends over that channel section (121) of the busbar channel (12) which is filled with encapsulation compound (20) and is mounted on the partition wall (10), surrounding it at a distance, and with the sealing collar (14) having at least one end wall (22), which closes one connecting stub end and is composed of expanded expansion modules (26) through which the busbar channel (12) passes, as well as an inorganic encapsulation compound (25) which fills the space between the connecting stub (21) and the busbar channel (12).

6. Partition wall bushing according to Claim 5,
**characterized**
**in that** the connecting stub (21) is welded to the partition wall (10) around the opening edge of the partition wall opening (11).

7. Partition wall bushing according to Claim 5 or 6,
**characterized**
**in that**, when the connecting stub (21) is installed in a horizontal position, the other connecting stub end is closed by an identical end wall (22), and in that a filling opening (23) and a venting opening are arranged in the intermediate space in the connecting stub wall, which is bounded by the end walls (22), the connecting stub (21) and the busbar channel (12), in order to insert the encapsulation compound (25).

8. Partition wall bushing according to Claim 7,
**characterized**
**in that**, if the busbar channel (12) is passed through a vertical partition wall (10), the connecting stub (21) is mounted approximately centrally on the partition wall (10).

9. Partition wall bushing according to Claim 6,
**characterized**
**in that**, if the busbar channel (12) is passed through a horizontal partition wall (10), the connecting stub (21) is mounted eccentrically on the partition wall (10), in its upper area.

## Revendications

1. Canal de rails conducteurs pour le passage à travers des ouvertures (11) disposées dans des cloisons de séparation (10), dans lequel sont disposés des rails conducteurs (13) espacés les uns des autres, les cavités présentes entre les rails (13) d'une part et les rails (13) et la paroi du canal (15) d'autre part étant remplies avec un matériau à haute isolation électrique dans une section de canal (121) s'étendant à travers l'ouverture (11) dans la position de montage,
**caractérisé en ce que**
la section de canal (121) est délimitée par deux cloisons transversales (18) emboîtées à l'intérieur du canal dans l'espacement longitudinal des deux cloisons, à base de plaques de laine de roche (17) par exemple, qui sont traversées par les rails conducteurs (13), et **en ce que**, dans la section de canal (121), les cavités incluses entre les cloisons transversales (18) sont remplies complètement avec une masse de scellement à haute isolation électrique.

2. Canal de rails conducteurs selon la revendication 1,
**caractérisé en ce que**
la masse de scellement (20) est à base d'une substance organique, de préférence de la résine.

3. Canal de rails conducteurs selon l'une quelconque des revendications 1 ou 2,
**caractérisé en ce que**
dans la paroi du canal (15) est entaillée au moins une fenêtre (16) s'étendant sur la section de canal (121), à travers laquelle les cloisons transversales (18) sont emboîtées entre les rails (13) et la masse de scellement (20) est chargée.

4. Canal de rails conducteurs selon la revendication 3,
**caractérisé en ce que**
deux fenêtres (16) se faisant face de façon congruente sont entaillées dans la paroi de canal (15) et **en ce que**, après l'ajustement des parois frontales (22), une fenêtre (16) est recouverte avec une natte de laine de roche (19) et la section de canal (121) est scellée par l'autre fenêtre (16).

5. Passage de cloison de séparation, en particulier dans des bateaux ou dans des constructions industrielles ou des bâtiments élevés, avec un canal de rails conducteurs (12) s'étendant à travers une ouverture de cloison de séparation (11) selon l'une quelconque des revendications 1 à 4 et avec une garniture d'étanchéité (14) enchâssée entre le canal de rails conducteurs (12) et le bord d'ouverture de l'ouverture de cloison de séparation (11), qui présente une tubulure (21) s'étendant sur la section de canal (121), remplie de masse de scellement (20), du canal de rails conducteurs (12), entourant celle-ci à distance, fixée sur la cloison de séparation (10), avec de préférence une forme cylindrique creuse, au moins une paroi frontale (22) fermant une extrémité de tubulure à base de modules de gonflement (26) gonflés, qui est traversée par le canal de rails conducteurs (12), et une masse de scellement (25) inorganique et remplissant l'espace intermédiaire entre la tubulure (21) et le canal de rails conducteurs (12).

6. Passage de cloison de séparation selon la revendication 5,
**caractérisé en ce que**
la tubulure (21) est soudée avec la cloison de séparation (10) autour du bord d'ouverture de l'ouverture de la cloison de séparation (11).

7. Passage de cloison de séparation selon la revendication 5 ou 6,
**caractérisé en ce que**
avec une position de montage horizontale de la tubulure (21), l'autre extrémité de tubulure est fermée avec une paroi frontale (22) identique et **en ce qu'**une ouverture de remplissage (23) et une ouverture de ventilation (24) sont disposées dans la paroi de tubulure pour l'introduction de la masse de scellement (25) dans l'espace intermédiaire délimité par les parois frontales (22), la tubulure (21) et le canal de rails conducteurs (12).

8. Passage de cloison de séparation selon la revendication 7,
**caractérisé en ce que**
avec un canal de rails conducteurs (12) passé à travers une cloison de séparation (10) verticale, la tubulure (21) est fixée à peu près au centre de la cloison de séparation (10).

9. Passage de cloison de séparation selon la revendication 6,
**caractérisé en ce que**
avec un canal de rails conducteurs (12) passé à travers une cloison de séparation (10) horizontale, la tubulure (21) est fixée de façon excentrée dans sa zone supérieure sur la cloison de séparation (10).
